# DEMANDE DE BREVET EUROPEEN

(11) **EP 0 542 602 A1**
(43) Date de publication de la demande: **19.05.1993**
(21) Numéro de dépôt: 92402984.6
(22) Date de dépôt: 04.11.1992
(51) Int. Cl.: B23K 26/00, F22B 37/00

(54) **Dispositif de travail au laser à l'intérieur d'un élément tubulaire**

(30) Priorité: 13.11.1991 FR 9113937
(71) Demandeur: FRAMATOME, 92400 Courbevoie (FR)
(72) Inventeur: Cartry, Jean-Pierre, F-69003 Lyon (FR)
(74) Mandataire: Polus, Camille

(57) **Abrégé**

Ce dispositif comporte une tête laser (10) adaptée pour être placée à l'intérieur d'un élément tubulaire (12). Cette tête (10) est munie d'une fenêtre (34) de sortie d'un faisceau laser de travail agencée sur un tronçon mobile (18) de la tête. Ce tronçon mobile (18) est entraîné en rotation au moyen d'un moteur placé à l'extérieur de l'élément tubulaire, relié au tronçon mobile (18) au moyen d'un arbre flexible (40) et d'un réducteur de vitesse (38). Ce dernier, disposé dans un tronçon fixe (20) de la tête au voisinage du tronçon mobile (18), comprend cinq engrenages épicycloïdaux (50A à 50E) couplés en série.

Application au manchonnage des tubes d'eau primaire d'un générateur de vapeur d'un réacteur nucléaire à eau sous pression.

## Description

La présente invention concerne un dispositif de travail au laser à l'intérieur d'un élément tubulaire.

Elle s'applique en particulier à la réalisation d'opérations de soudage au laser dans des tubes de faible diamètre tels que les tubes d'eau primaire d'un générateur de vapeur de réacteur nucléaire à eau sous pression.

Ces tubes, de forme coudée en U, sont disposés en faisceau dans le générateur de vapeur et sont maintenus entre eux par des plaques formant entretoises espacées suivant la hauteur du faisceau. Les extrémités de ces tubes sont fixées dans une plaque tubulaire de forte épaisseur. La partie du générateur de vapeur située en dessous de la plaque tubulaire constitue une boîte à eau.

Des fissures peuvent apparaître sur les parois des tubes du générateur de vapeur pendant la durée de vie normale du réacteur. Il est connu de réparer ces tubes par manchonnage.

On connait un procédé de manchonnage d'un tube fissuré dans lequel on fixe un manchon de réparation dans le tube par soudage au laser. Des cordons de soudure circulaires ou hélicoïdaux sont réalisés au moyen d'un dispositif de travail au laser adapté pour être introduit dans la boîte à eau et dans les tubes d'eau primaire du générateur de vapeur.

On connait déjà dans l'état de la technique un dispositif de travail au laser à l'intérieur d'un élément tubulaire, du type comprenant une tête laser qui comporte un tronçon mobile muni d'une fenêtre de sortie d'un faisceau laser de travail, et des moyens d'entraînement en rotation de ce tronçon mobile comportant un moteur, placé à l'extérieur de la tête, un réducteur de vitesse et des moyens flexibles de transmission du mouvement rotatif du moteur au tronçon mobile par l'intermédiaire du réducteur.

Les cordons de soudure circulaires sont réalisés par rotation du tronçon mobile de la tête laser. Les cordons de soudure hélicoïdaux sont réalisés en combinant des mouvements de rotation et de translation du tronçon mobile.

Habituellement le moteur d'entraînement du tronçon mobile et le réducteur de vitesse sont disposés dans la boîte à eau du générateur de vapeur. Dans certains cas, la tête de soudage doit être positionnée à une hauteur élevée dans un tube du générateur de vapeur. Les moyens flexibles de transmission reliant le moteur au tronçon mobile ont donc une longueur importante. Par ailleurs, les conditions optimales de réalisation d'un cordon de soudure circulaire ou hélicoïdal imposent une vitesse de rotation relativement faible du tronçon mobile et des moyens d'entraînement qui lui sont associés.

La longueur importante de la transmission flexible et la vitesse de rotation faible de l'arbre de sortie du réducteur ont pour conséquence une vitesse de rotation non uniforme du tronçon mobile de la tête laser et, par suite, des défauts de formation du cordon de soudure.

L'invention a notamment pour but de réaliser des cordons de soudure circulaires ou hélicoïdaux, de bonne qualité, dans un tube de générateur de vapeur, en utilisant une tête laser munie d'un moteur standard d'entraînement en rotation disposé à l'extérieur du tube.

A cet effet l'invention a pour objet un dispositif de travail au laser à l'intérieur d'un élément tubulaire du type précité, caractérisé en ce que le réducteur de vitesse est disposé dans un tronçon fixe en rotation de la tête, au voisinage du tronçon mobile.

Suivant d'autres caractéristiques de l'invention:
- le réducteur comporte au moins un engrenage épicycloïdal comprenant un grand planétaire à denture intérieure, un planétaire central, des satellites en prise avec le grand planétaire et le planétaire central et un porte-satellites, le planétaire central d'un engrenage épicycloïdal étant solidaire d'un arbre d'entrée du réducteur, le porte-satellites d'un engrenage épicycloïdal étant solidaire d'un arbre de sortie du réducteur, le grand planétaire de chaque engrenage épicycloïdal étant solidaire du tronçon fixe en rotation de la tête ;
- le réducteur comporte au moins deux engrenages épicycloïdaux couplés en série de telle façon que, d'une part, les grands planétaires fixes sont constitués d'un organe tubulaire à denture intérieure commun à tous les engrenages épicycloïdaux et, d'autre part, le porte-satellites d'un engrenage épicycloïdal amont est solidaire du planétaire central d'un engrenage épicycloïdal qui le suit, l'engrenage épicycloïdal amont étant celui de ces deux engrenages qui est le plus proche de l'entrée du réducteur ;
- le réducteur comporte cinq engrenages épicycloïdaux couplés en série ;
- les planétaires centraux, les porte-satellites des engrenages épicycloïdaux et les arbres d'entrée et de sortie du réducteur sont de forme générale tubulaire et sont coaxiaux à l'axe longitudinal de la tête laser et à une fibre optique traversant longitudinalement le réducteur et véhiculant le faisceau laser de travail ;
- l'extrémité distale de la fibre optique est solidaire en translation du tronçon mobile mais libre en rotation par rapport à celui-ci ;
- l'arbre de sortie du réducteur est cannelé sur sa surface extérieure et coopère avec une couronne à denture intérieure complémentaire solidaire du tronçon mobile de la tête laser de manière que ce tronçon mobile soit solidaire en rotation de l'arbre de sortie et déplaçable axialement par rapport à ce dernier ;
- les moyens de transmission du mouvement rotatif du moteur comprennent un arbre de transmission muni d'un pignon d'extrémité engrenant avec une denture externe de l'arbre d'entrée ;
- les engrenages épicycloïdaux comportent trois satellites chacun.

Un exemple de réalisation de l'invention va être décrit ci-dessous en se référant aux dessins annexés dans lesquels :
- la figure 1 est une vue schématique en coupe longitudinale suivant la ligne 1-1 de la figure 2 montrant une tête laser d'un dispositif selon l'invention ;
- la figure 2 est une vue en coupe selon la ligne 2-2 de la figure 1.

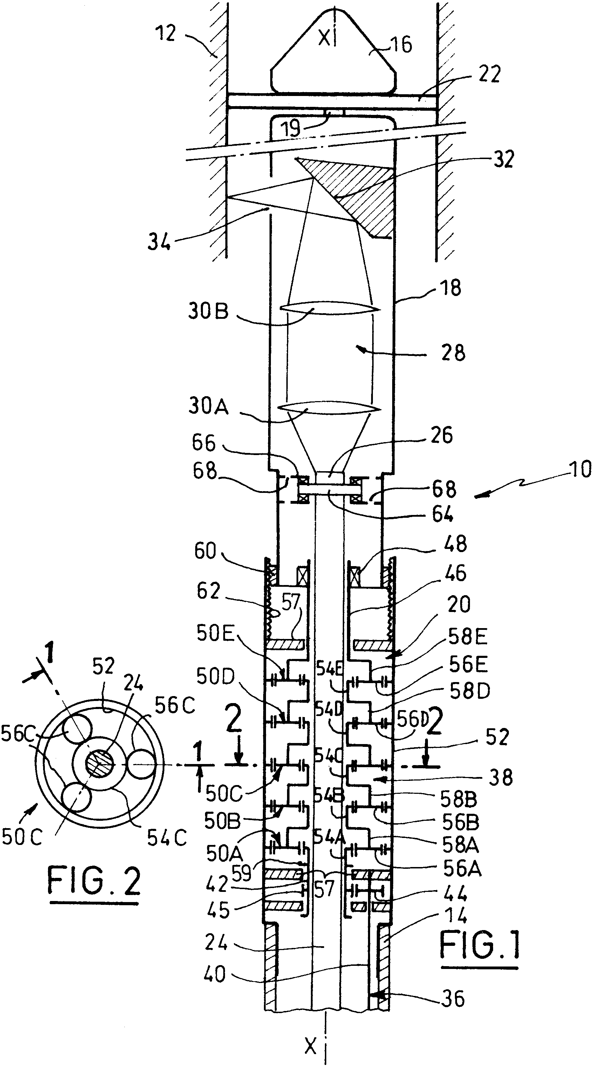

On voit sur la figure 1 une tête laser 10, de forme générale cylindrique, d'un dispositif de travail au laser selon l'invention pour la réalisation de cordons de soudure hélicoïdaux. Cette tête laser 10 est introduite dans un élément tubulaire 12 constitué, par exemple, par un manchon de réparation d'un tube d'eau primaire d'un générateur de vapeur de réacteur nucléaire.

La tête laser 10 est portée par un prolongateur tubulaire flexible 14 relié à des moyens de manutention et de commande, non représentés, placés à l'extérieur de l'élément tubulaire 12.

La tête laser 10 comprend, de haut en bas en considérant la figure 1, une ogive de guidage 16, un tronçon mobile 18 monté rotatif autour d'une broche axiale 19 et un tronçon rigide 20 fixe par rapport à l'élément tubulaire 12, raccordé au prolongateur 14.

La tête laser 10 comporte de plus des moyens connus de positionnement dans l'élément tubulaire 12, dont on a représenté uniquement une brosse de centrage 22 disposée sous l'ogive de guidage 16. Ces moyens de positionnement sont par exemple du type décrit dans la demande de brevet FR-2 656 558.

Le faisceau laser du dispositif de travail au laser est véhiculé jusqu'à la tête 10 au moyen d'une fibre optique 24, coaxiale à l'axe longitudinal X-X de la tête. L'extrémité distale 26 de la fibre optique est disposée à l'intérieur du tronçon mobile 18 de la tête laser en étant portée par des moyens qui seront décrits ultérieurement.

La fibre optique 24 émet un faisceau en direction d'une cellule optique 28 comprenant plusieurs lentilles juxtaposées 30A,30B pour collimater et focaliser le faisceau.

Le faisceau focalisé est renvoyé radialement par un miroir 32, incliné à 45°, solidaire du tronçon mobile 18, vers un emplacement de soudage situé à l'extérieur de la tête laser, à travers une fenêtre latérale 34 de celle-ci.

Le dispositif de travail au laser comprend des moyens d'entraînement en rotation et des moyens de déplacement axial du tronçon mobile 18 de la tête laser.

Les moyens d'entraînement en rotation comprennent un moteur, non représenté sur les figures, disposé à l'extérieur de l'élément tubulaire 12, par exemple dans la boîte à eau du générateur de vapeur. Ce moteur est relié par l'intermédiaire de moyens de transmission 36 à un réducteur de vitesse désigné par la référence générale 38.

Les moyens de transmission 36 comprennent un câble flexible 40 formant arbre de transmission, disposé à l'intérieur du prolongateur 14. L'arbre de transmission 40 est relié, par une première extrémité non représentée sur les figures, au moteur d'entraînement et, par une seconde extrémité, à un arbre d'entrée 42 du réducteur 38 au moyen d'un pignon 44 d'extrémité engrenant avec une denture 45 ménagée sur la surface externe de l'arbre d'entrée 42.

Le réducteur 38 est relié au tronçon mobile 18 par un arbre de sortie 46, cannelé sur sa surface extérieure, en prise avec une couronne 48, à denture intérieure complémentaire, solidaire du tronçon mobile 18. L'arbre de sortie 46 du réducteur coopère avec la couronne 48 du tronçon mobile de manière que ce tronçon mobile soit solidaire en rotation de l'arbre de sortie et déplaçable axialement par rapport à ce dernier à l'aide des moyens de déplacement axial qui seront décrits ultérieurement.

On voit sur les figures 1 et 2 que le réducteur 38 comprend cinq engrenages épicycloïdaux 50A à 50E couplés en série.

Chaque engrenage épicycloïdal comprend un grand planétaire 52, un planétaire central 54A à 54E, trois satellites 56A à 56E disposés à 120° les uns des autres en prise avec le grand planétaire et le planétaire central et un porte-satellites 58A à 58E.

Les planétaires centraux 54A à 54E et les porte-satellites 58A à 58E des engrenages épicycloïdaux ainsi que les arbres d'entrée 42 et de sortie 46 du réducteur 38 sont de forme générale tubulaire et sont coaxiaux à l'axe X-X de la tête laser et à la fibre optique 24 traversant longitudinalement le réducteur.

Le planétaire central 54A de l'engrenage épicycloïdal 50A inférieur, en considérant la figure 1, est solidaire de l'arbre d'entrée 42 du réducteur 38. Le porte-satellites 58E de l'engrenage épicycloïdal 50E supérieur, en considérant la figure 1, est solidaire de l'arbre de sortie 46 du réducteur 38.

Les grands planétaires 52 de chaque engrenage épicycloïdal 50A à 50E sont constitués d'un organe tubulaire à denture intérieure, commun à tous les engrenages épicycloïdaux, solidaire du tronçon fixe 20 de la tête laser.

Le porte-satellites 58A à 58D d'un engrenage épicycloïdal inférieur est solidaire du planétaire central 54B à 54E d'un engrenage épicycloïdal qui lui est immédiatement supérieur.

Les divers éléments rotatifs du réducteur 38 sont retenus axialement par des moyens appropriés, que l'on a schématisés par des flasques 57 solidaires du tronçon fixe 20 et des collerettes 59 prévues sur l'arbre d'entrée 42.

Le rapport de réduction du réducteur est égal à 1/3⁵. Dans le cas où il y a n engrenages épicycloïdaux couplés en série, le rapport de réduction est de 1/3ⁿ.

Les moyens de déplacement axial du tronçon mobile 18 de la tête laser comprennent un filetage 60 agencé sur la surface périphérique extérieure du tronçon mobile, coopérant, lors de la rotation du tronçon mobile, avec une virole 62 taraudée, solidaire du tronçon fixe 18 et coaxiale à celui-ci.

L'extrémité distale 26 de la fibre optique 24 comporte une bague 64 portée par un palier de butée 66 à roulements solidaire du tronçon mobile. Ce palier de butée 66 rend l'extrémité distale de la fibre optique solidaire du mouvement de translation du tronçon mobile tout en permettant la rotation de ce tronçon mobile autour de la fibre optique, laquelle est immobilisée en rotation.

Le dispositif de travail au laser comprend des moyens de rappel élastique de la fibre optique 24, non représentés, assurant le réglage automatique de la longueur de la fibre optique en fonction du déplacement axial du tronçon mobile portant l'extrémité distale 26 de la fibre optique.

Le palier de butée 66 est muni d'orifices axiaux 68 permettant le passage d'un gaz utilisé habituellement pour les opérations de soudage en atmosphère contrôlée. Ce gaz est amené par des moyens connus dans le prolongateur tubulaire 14 en amont du réducteur 38, c'est-à-dire dans la partie inférieure de la tête laser en considérant la figure 1. Le gaz passe à travers l'arbre d'entrée creux 42 du réducteur, les planétaires centraux 54A à 54E, les porte-satellites 58A à 58E et l'arbre de sortie creux 46 du réducteur. Le gaz passe ensuite à travers les orifices 68 du palier de butée et la fenêtre 34 pour atteindre la zone de soudage. Une circulation de gaz est également assurée à l'extérieur de la tête de soudage 10, entre celle-ci et l'élément tubulaire 12.

Le dispositif de travail au laser que l'on vient de décrire permet de réaliser des soudures hélicoïdales. On peut également réaliser des soudures circulaires en supprimant notamment les moyens d'entraînement axial du tronçon mobile 18 de la tête laser constitués par le filetage 60 coopérant avec la virole taraudée 62.

Le moteur d'entraînement utilisé pour déplacer le tronçon mobile de la tête laser peut être un moteur électrique ou pneumatique de type standard, utilisé habituellement pour les opérations de manutention dans le générateur de vapeur. Le moteur d'entraînement tourne à une vitesse relativement élevée permettant la transmission d'un mouvement rotatif uniforme sur une grande distance jusqu'au réducteur disposé à proximité du tronçon mobile de la tête. Le coefficient élevé de réduction de vitesse du réducteur permet d'adapter la vitesse du moteur au mouvement rotatif relativement lent du tronçon mobile. Dans l'exemple décrit, le tronçon mobile de la tête laser tourne à une vitesse de 15 t/mn.

L'invention permet de réaliser des cordons de soudure hélicoïdaux ou circulaires à différentes altitudes dans les tubes d'eau primaire d'un générateur de vapeur, depuis la plaque tubulaire de fixation des extrémités des tubes jusqu'à la dernière plaque entretoise du faisceau de tube.

L'invention permet également d'effectuer tout type de travaux au laser nécessitant une tête laser rotative.

## Revendications

1. Dispositif de travail au laser à l'intérieur d'un élément tubulaire (12), du type comprenant une tête laser (10) qui comporte un tronçon mobile (18) muni d'une fenêtre (34) de sortie d'un faisceau laser de travail, et des moyens d'entraînement en rotation de ce tronçon mobile comportant un moteur, placé à l'extérieur de la tête (10), un réducteur de vitesse (38) et des moyens flexibles (36) de transmission du mouvement rotatif du moteur au tronçon mobile (18) par l'intermédiaire du réducteur, caractérisé en ce que le réducteur de vitesse (38) est disposé dans un tronçon (20) fixe en rotation de la tète, au voisinage du tronçon mobile (18).

2. Dispositif selon la revendication 1, caractérisé en ce que le réducteur (38) comporte au moins un engrenage épicycloïdal (50A à 50E) comprenant un grand planétaire (52) à denture intérieure, un planétaire central (54A à 54E), des satellites (56A à 56E) en prise avec le grand planétaire et le planétaire central et un porte-satellites (58A, 58E), le planétaire central (54A) d'un engrenage épicycloïdal (50A) étant solidaire d'un arbre d'entrée (42) du réducteur (38), le porte-satellites (58E) d'un engrenage épicycloïdal (50E) étant solidaire d'un arbre de sortie (46) du réducteur (38), le grand planétaire de chaque engrenage épicycloïdal étant solidaire du tronçon (20) fixe en rotation de la tête (10).

3. Dispositif selon la revendication 2, caractérisé en ce que le réducteur (38) comporte au moins deux engrenages épicycloïdaux (50A à 50E) couplés en série de telle façon que, d'une part, les grands planétaires fixes sont constitués d'un organe tubulaire (52) à denture intérieure commun à tous les engrenages épicycloïdaux (50A à 50E) et, d'autre part, le porte-satellites (58A à 58D) d'un engrenage épicycloïdal amont est solidaire du planétaire central (54B à 54E) d'un engrenage épicycloïdal qui le suit, l'engrenage épicycloïdal amont étant celui de ces deux engrenages qui est le plus proche de l'entrée du réducteur.

4. Dispositif selon la revendication 3, caractérisé en ce que le réducteur comporte cinq engrenages épicycloïdaux (50A à 50E) couplés en série.

5. Dispositif selon l'une quelconque des revendications 2 à 4, caractérisé en ce que les planétaires centraux (54A à 54E), les porte-satellites (58A à 58E) des engrenages épicycloïdaux et les arbres d'entrée (42) et de sortie (46) du réducteur (38) sont de forme générale tubulaire et sont coaxiaux à l'axe longitudinal (X-X) de la tête laser et à une fibre optique (24) traversant longitudinalement le réducteur (38) et véhiculant le faisceau laser de travail.

6. Dispositif selon la revendication 5, caractérisé en ce que l'extrémité distale (26) de la fibre optique (24) est solidaire en translation du tronçon mobile (18) mais libre en rotation par rapport à celui-ci.

7. Dispositif selon l'une quelconque des revendications 2 à 6, caractérisé en ce que l'arbre de sortie (46) du réducteur (38) est cannelé sur sa surface extérieure et coopère avec une couronne (48) à denture intérieure complémentaire solidaire du tronçon mobile (18) de la tête laser de manière que ce tronçon mobile soit solidaire en rotation de l'arbre de sortie (46) et déplaçable axialement par rapport à ce dernier.

8. Dispositif selon l'une quelconque des revendications 2 à 7, caractérisé en ce que les moyens de transmission (36) du mouvement rotatif du moteur comprennent un arbre de transmission (40) muni d'un pignon (44) d'extrémité engrenant avec une denture (45) externe de l'arbre d'entrée (42) du réducteur (38).

9. Dispositif selon l'une quelconque des revendications 2 à 8, caractérisé en ce que les engrenages épicycloïdaux (50A à 50E) comportent trois satellites (56A à 56E) chacun.
